Europäisches Patentamt

European Patent Office

Office européen des brevets

(19)

(11) Veröffentlichungsnummer: **0 118 920**

**A2**

(12) ## EUROPÄISCHE PATENTANMELDUNG

(21) Anmeldenummer: **84102725.3**

(22) Anmeldetag: **13.03.84**

(51) Int. Cl.³: **H 04 M 9/08**

(30) Priorität: **15.03.83 GB 8307143**

(43) Veröffentlichungstag der Anmeldung:
**19.09.84** Patentblatt **84/38**

(84) Benannte Vertragsstaaten:
**DE FR SE**

(71) Anmelder: **International Standard Electric Corporation**
**320 Park Avenue**
**New York New York 10022(US)**

(72) Erfinder: **Hansen, Bjorn Napier**
**95 Shetland Road**
**Haverhill Suffolk CB9 0LR(GB)**

(74) Vertreter: **Villinger, Bernhard, Dipl.-Ing. et al,**
**Standard Elektrik Lorenz AG Patent- und Lizenzwesen**
**Postfach 300 929 Kurze Strasse 8**
**D-7000 Stuttgart 30(DE)**

(54) **Automatische Fernsprechanlage mit Freisprechbetrieb.**

(57) In bekannten Fernsprechanlagen mit Freisprechbetrieb wird das aufgrund der akustischen Kopplung von Mikrofon und Lautsprecher mögliche Pfeifgeräusch dadurch vermieden, daß die Dämpfung in der Übertragungsrichtung, in der keine Sprachsignale vorliegen, im Vergliech mit der Dämpfung im aktiven Sprachkanal erhöht wird. Dabei werden die Sprachabtastwerte in den beiden Übertragungsrichtungen nacheinander überwacht; jeder Abtastwert wird mit einem Schwellwert verglichen, der auch vom Geräuschpegel in den Kanälen beeinflußt wird. Diese Operationen und die Einstellung der Dämpfung erfolgen unter der Steuerung eines Prozessors, da bei diesen Fernsprechanlagen die Sprache in digitaler Form übertragen wird.

Die Erfindung schlägt vor, nicht alle Sprachabtastwerte zu überwachen, um entsprechende Informationen über die Sprachamplitudenzustände der beiden Sprachübertragungsrichtungen abzuleiten. Daher wird nur jeder vierte Abtastwert benutzt. Dadurch kann ein einziger Mikroprozessor zwei Leitungen abwechselnd bedienen. Obgleich dadurch der Aufwand an Programmen erhönt wird, ist dies doch billiger als ein zusätzlicher Mikroprozessor.

./...

Croydon Printing Company Ltd.

Fig.2.

0118920

B.N.Hansen-1

## Automatische Fernsprechanlage mit Freisprechbetrieb

Die Erfindung betrifft eine automatische Fernsprechanlage, in der die Sprache digital im Zeitvielfachbetrieb überwacht wird und in der eine Freisprecheinrichtung zur Verwendung durch wenigstens einige der an die Anlage angeschlossenen Fernsprechapparate zur Verfügung steht, in der ferner die Steuerung der Freisprecheinrichtung hinsichtlich eines Teilenehmeranschlusses die Überwachung des Sprachsignals in beiden Übertragungsrichtungen dieses Teilnehmeranschlusses umfaßt, in der ferner die Dämpfung in der einen oder der anderen Richtung in derjenigen Richtung, verglichen mit der Dämpfung in der anderen Richtung, erhöht wird, in der keine Sprachsignale festgestellt worden sind, in der ferner die Sprachsignale in den beiden Richtungen durch Überwachung von Sprachabtastwerten festgestellt und die Überwachungsergebnisse mit einem vorgegebenen Schwellwert verglichen werden, und in der die Überwachung, der Vergleich und die Einstellung der Dämpfungen mit Hilfe eines digitalen Prozessors vorgenommen werden.

In Fernsprechanlagen, in denen solche Freisprechapparate benutzt werden, kann die Übertragung der Sprache in digitaler Form erfolgen. Die Freisprechapparate sind dann an ein digital arbeitendes Koppelnetz angeschlossen. Da die Operationen in einer solchen Anlage digital mit Hilfe einer Prozessorsteuerung ablaufen, erfolgt die Steuerung der Freisprecheinrichtung ebenfalls digital.

In Fernsprechanlagen mit Freisprechmöglichkeit müssen die aufgrund der akustischen Kopplung zwischen den elektroakustischen Wandlern (Mikrofon und Lautsprecher) möglichen

B.N.Hansen-1

Pfeifgeräusche vermieden werden. Zu diesem Zweck werden die Signalverstärkungen in den beiden Sprechwegen derart gesteuert, daß die Gesamtschleifenverstärkung kleiner als eins ist. Dies wird dadurch erreicht, daß die Signale im ankommenden Sprechweg unter der Steuerung einer Feststelleinrichtung für die Sprachsignalamplitude gedämpft werden, wenn im abgehenden Sprechweg Signale vorhanden sind, und umgekehrt.

In der Patentanmeldung ... (B.N.Hansen-2) ist eine Anlage vorgeschlagen worden, in der das ankommende Signal abgetastet und dessen Amplitude mit einem vorgegebenen Schwellwert verglichen wird. Wenn dieser Schwellwert überschritten wird, folgt eine Anfangsverzögerungszeit, bevor der Sprechweg durchgeschaltet wird. Am Ende des Sprechsignals gibt es eine Halteverzögerungszeit zum Abschalten. Diese Anfangsverzögerungszeit sollte so bemessen sein, daß ein Abschneiden von Wortanfängen vermieden wird, während die richtige Bemessung der Halteverzögerungszeit ein unnötiges Schalten zwischen den Worten vermeidet. Zusätzlich müssen die Signale beim Vorhandensein von Geräuschen festgestellt werden. Daher ist eine Geräuscherkennungsschaltung vorgesehen, von der ein Geräuschparameter abgeleitet wird. Diese Geräuschparameter beeinflussen die vorgenannten Schwellwerte.

Die vorbeschriebene Anlage arbeitet zufriedenstellend, aber sie könnte noch wirtschaftlicher arbeiten.

Die Aufgabe der Erfindung besteht daher darin, eine Fernsprechanlage zu schaffen, bei der die Freisprechmöglichkeit in noch wirtschaftlicherer Weise erreicht wird.

Diese Aufgabe wird dadurch gelöst, daß die Überwachung an

B.N.Hansen-1

weniger als der vollen Anzahl von Abtastungen für jede Richtung stattfindet, so daß für jede Übertragungsrichtung nur 1 aus N solcher Abtastungen überwacht werden, und daß ein einziger Prozessor die Operationen in mehreren Sprachkanälen vornimmt, die Zugang zur Freisprecheinrichtung haben, wobei der Prozessor diese Sprachkanäle einzeln und nacheinander bedient.

Die Erfindung wird nun anhand eines Ausführungsbeispiels näher erläutert. Es zeigen:

Fig. 1    ein Blockschaltbild eines digitalen Koppelnetzes und einer Zweikanalfreisprecheinrichtung und

Fig. 2    ein Blockschaltbild ähnlich dem der Fig. 1, in der die Freisprecheinrichtung näher ausgeführt ist und ein einziger Mikroprozessor die Bereitstellung von Freisprecheinrichtungen für zwei Anschlüsse steuert.

Bei der zu beschreibenden Anlage laufen abwechselnd zwei Freisprechsteuerprogramme auf demselben Mikroprozessor, wodurch zwei Freisprechgespräche gleichzeitig stattfinden können. Dadurch wird die Anzahl der eigentlich benötigten Mikroprozessoren halbiert, wenn auch die Anzahl der Speicher für die Programme verdoppelt werden. Diese zusätzlichen ROM-Speicher der erforderlichen Größe, in diesem Fall bis zu 1K, kosten viel weniger als ein zusätzlicher Mikroprozessor.

Die Programmsteuerung der Kanalverstärkungen wird durch eine ständige Überwachung der Sprachabtastwerte aus beiden Übertragungsrichtungen und durch das Ableiten eines Parameters aus den Abtastergebnissen ausgeführt, wobei

-/-

B.N.Hansen-1

dieser Parameter die Spracheinhüllende repräsentiert. Die Spracheinhüllende-Parameter werden wie in der erwähnten Patentanmeldung mit den vorgegebenen Schwellwerten verglichen. Dann wird der betreffende Sprachkanal durchgeschaltet oder zumindest teilweise gesperrt, indem die Dämpfungen in den Sprechwegen entsprechend gesteuert werden.

Es ist festgestellt worden, daß es für die Ableitung der Spracheinhüllende-Parameter nicht nötig ist, jeden Sprachabtastwert zu überwachen, sondern daß wie bei der zu beschreibenden Anlage jeder vierte Abtastwert eine ausreichende Information über die laufenden Sprachmuster in den Kanälen gibt. Daher ist ausreichend Prozessorzeit vorhanden, um die Verstärkungssteuerung in zwei Freisprechkanälen gleichzeitig vornehmen zu können. In einigen Anlagen mit Freisprechbetrieb kann auch der Divisor der Sprachabtastwerte einen anderen Wert als vier haben.

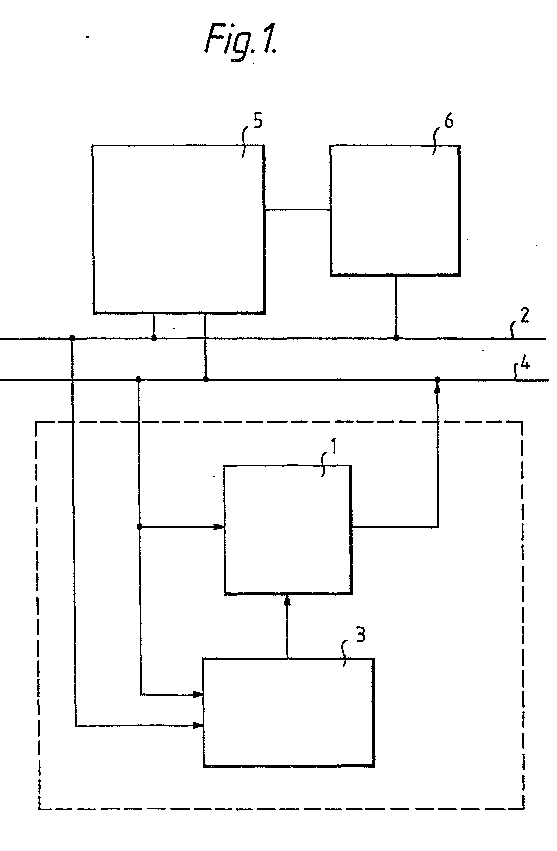

Wie in Fig. 1 gezeigt ist, weist die digitale Freisprecheinrichtung für zwei Kanäle und für einen Anschluß ein Dämpfungsglied für digitale Signale in Form eines ROM-Speichers 1 auf. Der Eingangscodewert vom Adreßbus 2 der Anlage enthält die ROM-Adresse. Der entsprechende Ausgangswert besteht in einem Codewert, der die gedämpfte Version des Eingangswerts darstellt. Eine Freisprechsteuerschaltung 3 weist einen Mikroprozessor und einen Speicher auf. Diese sind mit dem Sprachbus 4 und dem Adreßbus 2 einer Fernsprechanlage verbunden, beispielsweise einer mit Tasten digital arbeitenden Anlage oder einer digitalen Fernsprechnebenstellenanlage, die mit einem digitalen Koppelnetz 5 und einer Koppelnetzsteuereinrichtung 6 arbeitet. Während eines Freisprechgesprächs werden digitale Codewerte, die die vom Rufenden A zum Gerufenen B ausge-

B.N.Hansen-1

sandten Sprachamplituden bzw. die vom Gerufenen B zum Rufenden A ausgesandten Sprachamplituden darstellen, kontinuierlich aus den Speicherstellen des Koppelnetzes 5 geholt, das durch den ROM-Speicher 1 adressiert wird, und
in andere Speicherstellen des Koppelnetzes 5 zurückübertragen. Zu Beginn erfolgt dies ohne Inanspruchnahme des
Mikroprozessors, und jeder Kanal ist um einen Sollwert
gedämpft, d.h. der Kanal befindet sich im Bereitschaftszustand. In der Zwischenzeit überwacht die Freisprechsteuerschaltung 3 jeden vierten Sende- und Empfangsabtastwert in jedem der beiden Kanäle. Aus der gewonnenen
Information werden Steuerparameter abgeleitet, die den
Dämpfungswert jeder Abtastung gemäß der dem ROM-Speicher
1 zugeführten Adresse einstellen. Alle weiteren Einstellungen der Kanalverstärkungen werden nun durch die Freisprechsteuerschaltung 3 gemäß den Algorithmen festgelegt,
die im steuernden Programm vorhanden sind.

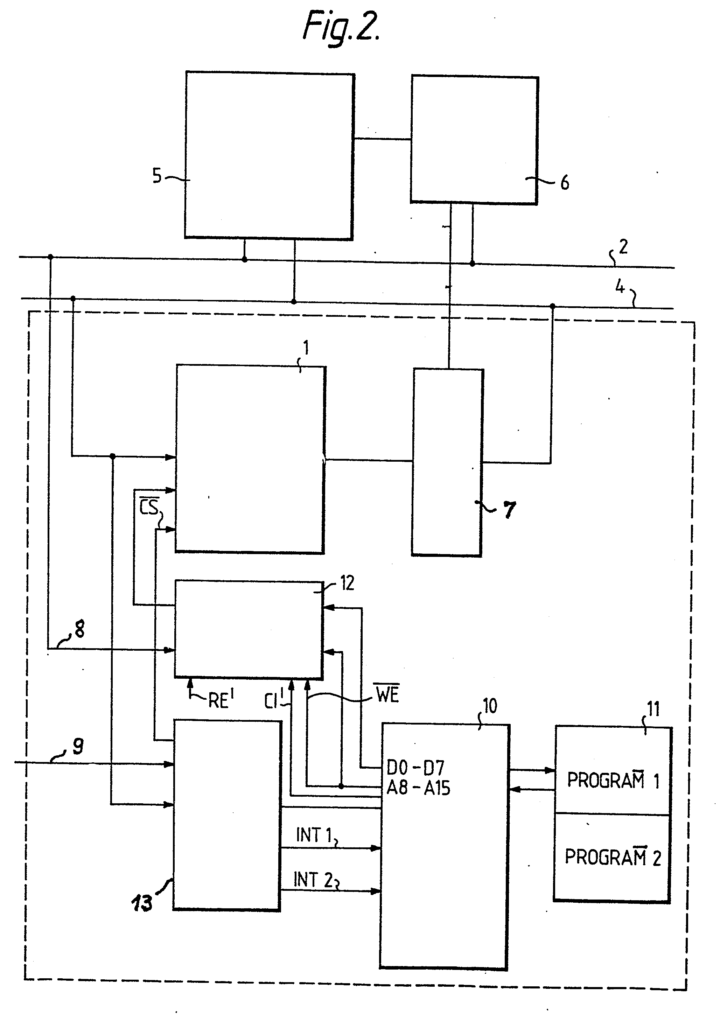

Fig. 2 zeigt die Freisprechsteuerschaltung 3 für zwei Kanäle ausführlicher. Ein Mikroprozessor 10 und ein ROM-
Programmspeicher 11 sind als zwei getrennte Komponenten
dargestellt, doch ist die Methode auch dann anwendbar,
wenn ein Einchipmikrorechner oder eine andere Datenverarbeitungseinrichtung mit Programmsteuerung benutzt wird.
Die Software besteht grundsätzlich aus zwei identischen,
aber unabhängigen Hauptprogrammen, die jeweils eine Unterprogramm oder Unterbrechungsroutine (Interruptroutine)
aufweisen. Die Sprechwegverstärkungseinstellungen werden
durch Algorithmen in den Hauptprogrammen bestimmt. Die
Unterbrechungsroutinen überwachen die laufenden Sprachmuster der beiden Kanäle und übertragen die Überwachungsergebnisse in die Hauptprogramme. Die Abtastrate der
Sprachkanäle wird zu I/T angenommen, und der Programmfluß
wird jede 2T Sekunden unterbrochen und durch Zeitimpulse

0118920

B.N.Hansen-1

zwischen den zwei Hauptprogrammen umgeschaltet, wobei die Zeitimpulse einer Anpassungsschaltung 13 entnommen und den beiden Unterbrechungseingängen INT1, INT2 zugeführt werden. Die Unterbrechungsroutinen laufen am Beginn jeder 2T-Sekunden-Verarbeitungsperiode ab. Während des Ablaufs der Unterbrechungsroutine wird die aus den zwei Übertragungsrichtungen eines Sprachkanals stammende Signalamplitudeninformation in einen Wert umgewandelt, der an die Spracheinhüllende angenähert ist. Die entsprechenden Parameter werden dann dem Hauptprogramm zugeleitet. Die Verarbeitung läuft dann im ersten Hauptprogramm weiter, bis die 2T-Sekunden-Zeitperiode abgelaufen ist. Während dieser Zeitperiode werden die Spracheinhüllende-Parameter mit den vorgegebenen Schwellwerten verglichen, und der betreffende Sprachkanal wird dann gemäß der den Dämpfungsauswahlregistern 12 zugeführten Information durchgeschaltet oder teilweise gesperrt . Der Ablauf des ersten Hauptprogramms wird am Ende der 2T-Sekunden-Zeitperiode durch einen Zeitimpuls am Eingang INT2 unterbrochen, wonach die Unterbrechungsroutine 2 beginnt und die Sprachinformation in den zwei Übertragungsrichtungen des anderen Kanals überwacht. Wie vorher wird das Überwachungsergebnis dem anderen Hauptprogramm zur Verarbeitung zugeleitet. Dieses andere Hauptprogramm setzt die Ausführung an denjenigen Adressen, die den Adressen folgen, bei denen das Hauptprogramm unterbrochen worden war, durch einen Zeitimpuls am Eingang INT1 fort. Gleiches gilt für das erste Hauptprogramm.

Die Ergebnisse der in den beiden Hauptprogrammen vorgenommenen Verarbeitung bestehen aus vier Parametern, je zwei Parameter aus jedem Programm. Diese Parameter beziehen sich auf die für die zwei Sprachrichtungen in jedem Kanal benötigten Dämpfungspegel . Diese vier Parameter

B.N.Hansen-1

werden in einem Kurzzeitregister, dem Dämpfungsauswahlregister 12, gespeichert. Der ROM-Dämpfungsspeicherbereich ist in eine vorgegebene Anzahl von Dämpfungpegelbereichen unterteilt. Innerhalb jedes Dämpfungsbereichs ist der digitale Sprachabtastnenncode in einen entsprechenden Code mit geeigneter Dämpfung umgewandelt worden; beispielsweise nimmt der nach der A-Kennlinie codierte PCM-Abtastcodewert 11001010, wenn ihm eine Dämpfung von 6 dB zugeordnet wird, den Wert 11011010 an. Diese neuen Codewerte treten an die Stelle der am ROM-Speicher 1 ankommenden Codewerte, dessen Ausgangswerte eine Folge von Codewerten sind, die ein Sprachmuster darstellen, das identisch mit dem ankommenden Sprachmuster, aber in der Amplitude vermindert ist. In dieser Hinsicht ähnelt die Betriebsweise der in der erwähnten Patentanmeldung.

Der ROM-Speicher 1 arbeitet folgendermaßen. Die Abtastcodewerte der ankommenden Sprache bilden einen Teil der Adresse der ersetzten Codewerte. Der übrige Teil der Adresse wird durch das Dämpfungsauswahlregister 12 ergänzt, das den Zugang zu besonderen Dämpfungsbereichen der ROM-Speichers 1 ermöglicht. Die richtige Beziehung zwischen den Sprachabtastwerten und den Dämpfungscodewerten wird durch den Adreßcode der vom Koppelnetz 5 stammenden Abtastwerte und dessen Adressierung am Dämpfungsauswahlregister 12 sichergestellt. Der gedämpfte Ausgangscodewert wird zwischengespeichert und dann in das geeignete Register im Koppelnetz 5 durch die Koppelnetzsteuereinrichtung 6 zurückübertragen.

Wie bereits erwähnt wurde, kann der Divisor der Sprachabtastwerte einen anderen Wert als vier annehmen. So ist es in Anlagen, die mit Deltamodulation und der dort verwendeten hohen Abtastfrequenz arbeiten, möglich, den Divisor noch zu vergrößern.

- 1 -  0118920

B.N.Hansen-1

Patentansprüche

1. Automatische Fernsprechanlage, in der die Sprache digital im Zeitvielfachbetrieb überwacht wird und in der eine Freisprecheinrichtung zur Verwendung durch wenigstens einige der an die Anlage angeschlossenen Fernsprechapparate zur Verfügung steht, in der ferner die Steuerung der Freisprecheinrichtung hinsichtlich eines Teilenehmeranschlusses die Überwachung des Sprachsignals in beiden Übertragungsrichtungen dieses Teilnehmeranschlusses umfaßt, in der ferner die Dämpfung in der einen oder der anderen Richtung in derjenigen Richtung, verglichen mit der Dämpfung in der anderen Richtung, erhöht wird, in der keine Sprachsignale festgestellt worden sind, in der ferner die Sprachsignale in den beiden Richtungen durch Überwachung von Sprachabtastwerten festgestellt und die Überwachungsergebnisse mit einem vorgegebenen Schwellwert verglichen werden, und in der die Überwachung, der Vergleich und die Einstellung der Dämpfungen mit Hilfe eines digitalen Prozessors vorgenommen werden, dadurch gekennzeichnet, daß die Überwachung an weniger als der vollen Anzahl von Abtastungen für jede Richtung stattfindet, so daß für jede Übertragungsrichtung nur 1 aus N solcher Abtastungen überwacht werden, und daß ein einziger Prozessor (10) die Operationen in mehreren Sprachkanälen vornimmt, die Zugang zur Freisprecheinrichtung haben, wobei der Prozessor diese Sprachkanäle einzeln und nacheinander bedient.

ZT/P1-Krü-23.2.84

-/-

B.N.Hansen-1

2. Automatische Fernsprechanlage nach Anspruch 1, <u>dadurch gekennzeichnet</u>, daß die Zahl N=4 ist und der einzige Prozessor zwei Kanäle bedient.

-/-

0118920

## Fig.1.

Fig.2.